# EUROPEAN PATENT APPLICATION

(11) **EP 1 884 951 A1**
(43) Date of publication of application: **06.02.2008**
(21) Application number: 06746915.5
(22) Date of filing: 26.05.2006
(51) Int. Cl.: G11B 27/34

(54) **DISPLAY DEVICE**

(30) Priority: 27.05.2005 JP 2005155130
(71) Applicant: MATSUSHITA ELECTRIC INDUSTRIAL CO., LTD., Osaka 571-8501 (JP)
(72) Inventor: YASUDA, Takehiko c/o Matsushita El. Ind. Co. Ltd., 2-1-61, Shiromi, Chuo-ku, Osaka 540-6207 (JP)
(74) Representative: Pautex Schneider, Nicole Véronique
(86) International application number: PCT/JP2006/310586
(87) International publication number: WO 2006/126687

(57) **Abstract**

The present invention is provided to solve such a problem that a music is merely presented as a list but the user is not informed how the tune is arranged, in the music distributing system in the prior art in which the user can choose the music based on the analyzed result such as a feature, a tune, and the like of the music to get a favorite music. The present invention proposes a display device **characterized in that** plural pieces of symbol image information for symbolizing images of a contents are acquired and then a group of symbol images consisting of a plurality of symbol images constructed by plural pieces of symbol image information are output in such a manner that the group can be displayed in slide show style. At this time, the symbol image information can be acquired based on the analyzed result of the contents information. As a result, the symbol image can be displayed in response to the tune or the substance of the contents without user's particular operation.

## Description

### Technical Field

The present invention relates to a display device for showing contents symbols in a slide show.

### Background Art

It has already existed in the prior art (see Patent Literature 1) that a music distribution system enables the user to choose and get favorite music on the basis of an analyzed result such as a feature of the music, a tune, or the like.
Patent Literature 1: JP-A-2001-297093

### Disclosure of the Invention

### Problems that the Invention is to Solve

However, the music distribution system can merely present lists indicated in text relating to music (e.g., music titles) t but cannot inform the user how tune of the music istune. Moreover, , it is difficult for users to guess content or tunetune of unknown music on the basis of only the text-based list. Therefore, the users can hardly choose the music suited to user's feeling or current environment.

### Means for Solving the Problems

In light of such circumstances, the present invention proposes a display device characterized in that plural pieces of symbol image information for symbolizing an impression of the contents are acquired and then a group of symbol images are output in such a manner that the group can be displayed in slide show style. The group of symbol images consists of a plurality of symbol images which are constructed by plural pieces of symbol image information. At this time, the symbol image information can be acquired based on the analyzed result of the contents information. Accordingly, the symbol image can be displayed in response to the tune or the substance of the contents without user's particular operation.

Also, the symbol image information associated with contents identification information are acquired based on the contents identification information and then a group of symbol images consisting of a plurality of symbol images are output in such a manner that the group can be displayed in slide show style. The contents identification information is contained in contents information. The plurality of symbol images are constructed by the symbol image information. In addition, correspondence information that correlates the contents identification information with the symbol image information can be managed.

### Advantages of the Invention

As described above, in the display device according to any one or two inventions of the present invention, a group of symbol images can be displayed in slide show style, The group of symbol images consists of a plurality of symbol images which are constructed by the symbol image information. Therefore, even though the user has never viewed the contents being displayed, such user can recognize visually the impression of contents. Also, the user can choose easily the contents that fits in well with a user's feeling on that day. In addition, when the symbol image information can be acquired based on the analyzed result of contents information, the symbol image can be displayed in response to the tune or the substance of the contents without user's particular operation, and therefore a user's convenience can be improved.

Also, when the display device acquires the symbol image information associated with contents identification information based on the contents identification information contained in contents information and then displays/outputs a group of symbol images consisting of a plurality of symbol images constructed by, the symbol image information in slide show style, it can be expected that the searching operation of the symbol image is executed smoothly even though the symbol image information are held in a plurality of databases. In addition, the display device can manage the correspondence information used to correlate the contents identification information with the symbol image information. At this time, the management of the symbol image information and the database in which the symbol image information are accumulated can be facilitated by the adequate management of the correspondence information.

### Brief Description of the Drawings

[FIG.1] A conceptual view explaining a first embodiment of the present invention.
[FIG.2] A hardware configurative view explaining the present invention.
[FIG.3] A functional black diagram explaining the first embodiment,
[FIG.4] A view showing a list display of contents information in the first embodiment.

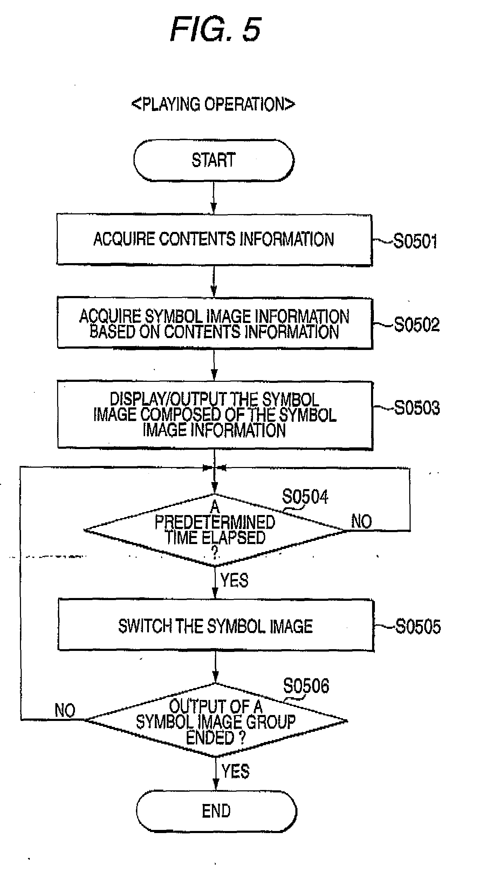

[FIG.5] A flowchart explaining a flow of processes in reproducing the contents in the first embodiment.
[FIG.6] A flowchart explaining a flow of hardware processes in reproducing the contents in the first embodiment.
[FIG.7] A functional block diagram explaining a second embodiment of the present invention.
[FIG.8] A functional block diagram explaining a third embodiment of the present invention.
[FiG.9] A view showing an example of databases in the third embodiment.
[FIG.10] A flowchart explaining a flow of processes in recording sounds of contents in the third embodiment.
[FIG.11] A flowchart explaining a flow of processes in registering the symbol image in a fourth embodiment of the present invention.

### Description of the Reference Numerals

0300 display device
0301 contents information acquiring portion
0302 symbol image information acquiring portion
0303 symbol image group output portion

### Best Mode for Carrying Out the Invention

The best modes for carrying out respective inventions will be explained hereinafter. Here, the present invention is not limited to these embodiments at all, and may be embodied in various modes within a scope that does not depart from a gist of the invention.

A first embodiment, a second embodiment and a third embodiment explain mainly claims 1, 2, 3, 7, 8 and 9. A fourth embodiment explains mainly claims 4, 5 and 6.

<<First embodiment>>

<First embodiment: Outline> A first embodiment will be explained hereunder. The present embodiment provides a display device characterized in that plural pieces of symbol image information for symbolizing the impression of the contents are acquired and then a group of symbol images consisting of a plurality of symbol images constructed by the plural pieces of symbol image information are output in such a manner that the group can be displayed in slide show style.

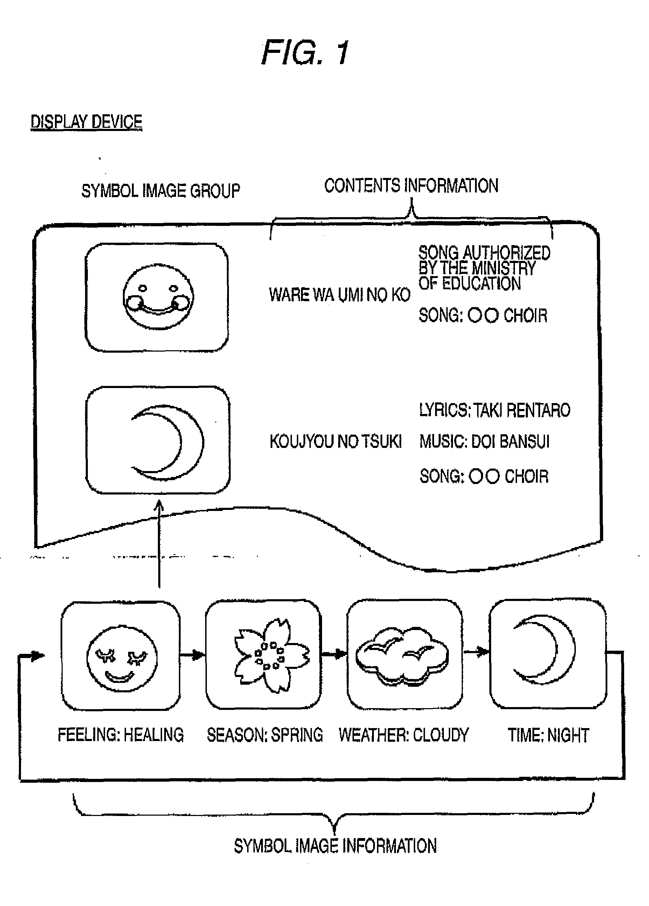

FIG.1 shows an example of a concept of the present embodiment. An example of a display screen of the display device of the present embodiment shown in FIG.1. Contents information such as name of contents (title), names of lyricist/composer, name of singer, and the like are displayed on the right side of the display screen, while a group of symbol images is displayed in slide show style on the left side. The group of symbol images denotes a group of images consisting of a plurality of symbol images constructed by plural pieces of symbol image information for symbolizing the impression of the contents. A scene in which a group of symbol images corresponding to respective contents are displayed/output is shown herein. A user can grasp an outline of contents when such user views the output symbol image.

Here, the case where the contents is "Koujyou no tsuki" is illustrated. In this case, image information for symbolizing quiet healing impression, night scene, cloudy weather scene in springtime, etc., for example, corresponds to the symbol image information. An illustrated image of a face assuming a quiet expression is employed as the symbol image for healing, and similarly a moon image, a cherry blossom image, and a cloud image are employed as a night scene, a spring scene, and a cloudy scene respectively, At this time, the symbol image may be prepared form data being held in advance in the display device or may be input from the user. A plurality of symbol image information are acquired relating to one content. In other words, a group of symbol images are generated from a plurality of symbol images that respectively correspond to the plurality of symbol image information. An example shown in FIG.1, the group of symbol images consists of four sheets of symbol images representing healing, spring, cloudy, and night. In displaying the group of symbol images, the symbol image is displayed/output in slide show style for each predetermined time (e.g., 2 second, or the like). The symbol image is switched/displayed sequentially every predetermined time. When the final symbol image is displayed, the screen goes back to the first symbol image and display of this image is continued until the screen is switched to the next symbol image. Since a group of symbol images consisting of a plurality of symbol images constructed by plural pieces of symbol image information are displayed in slide show style, the user can recognize visually the image of contents even though such user has never viewed the contents being displayed.

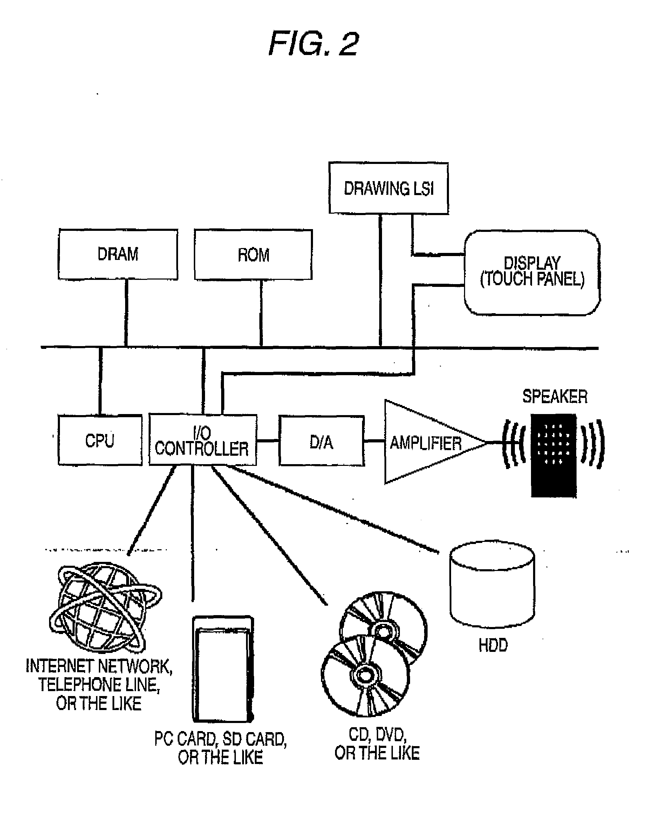

<Common to all embodiments: Hardware configuration> An example of a hardware configuration of the present invention is shown in FIG.2. Constituent elements of the present invention may be constructed by any one of hardware, software, and both hardware and software. For example, when a computer is utilized as an example of these implementations, the hardware constructed by CPU, memory (DRAM, ROM), bus, I/O controller, peripheral equipment, etc. and the software that are executable on these hardware can be listed. Concretely functions of respective portions as the constituent elements can be implemented through processing, storage, output, etc. of the data on the memory and the data input via the I/O controller by executing the program developed on the memory sequentially.

First, the CPU accepts the input of contents information from Internet network, PC card, CD, HDD, or the like, and operates a D/A converter circuit via the I/O controller, At this time, the analog-converted data is amplified by an amplifier and is output from a speaker. In contrast, the CPU acquires plural pieces of symbol image information for symbolizing the impression of the contents from HDD, or the like based on the contents information, Also, the CPU sends the symbol image information to a drawing LSI via DRAM, The drawing LSI draws the symbol image based on the symbol image information and then outputs the image to the display. At this time, a group of symbol images consisting of a plurality of symbol images is output such that these symbol images can be displayed in slide show style (details will be described later). Here, when the display has a touch panel function and the user chooses the contents by touching the display, or the like, this choice command is transmitted to the CPU via the I/O controller. In order to reproduce the concerned contents, the CPU accesses respective peripheral equipments via the I/O controller based on the program (This is true of the whole specification).

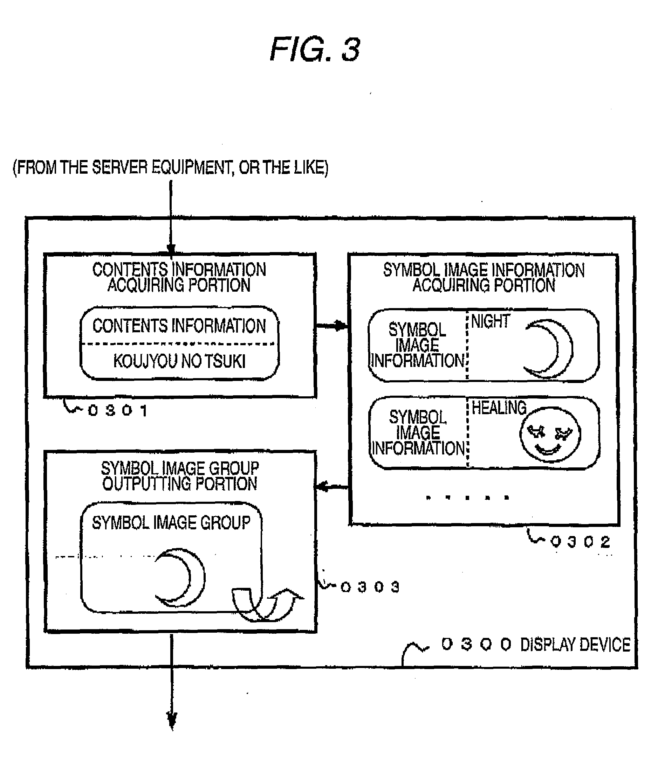

<First embodiment: Configuration> An example of functional blocks of the present embodiment is shown in FIG.3. A "display device" (0300) of the present embodiment shown in FIG.3 includes a "contents information acquiring portion"(0301), a "symbol image information acquiring portion"(0302), and a "symbol image group output portion"(0303).

The "display device" (0300) is any one of various equipments to which the image output device such as the display, or the like is connected or which have the image output device. The mobile terminal device (cellular phone, PDA, or the like), the car navigation system, the audio system, or the like corresponds to this display device.

The "contents information acquiring portion" (0301) acquires the contents information. The contents information may contain the contents itself such as music, video image, or the like and information attached to the contents, Various information such as identification information to identify the contents, name of contents (title name), names of copyright holders (names of lyricist/composer, names of director/ producer, etc,), names of players (singer, player, performer, etc.), contents play time, sound recording/video recording modes, and the like correspond to the information attached to the contents, It is assumed that the contents information are acquired from the mobile medium such as CD, DVD, PC card, or the like. Also, the contents information may be downloaded from an external server equipment, or the like via the Internet network, the digital television broadcasting, or the like. Also, the contents information after downloaded may be stored in the hard disk and then may be read from the hard disk as the case may be.

The "symbol image information acquiring portion" (0302) acquires plural pieces of symbol image information based on the acquired contents information. The "symbol image information" is information used to construct the symbol image that symbolizes the impression of the contents. In some cases, the impression of the contents, that the symbol image information symbolizes, contains an impression representing a human feeling generated based upon the contents. For example, there are a cheering music, a sad-mood music, a lilting music, a restful music, a fierce music, and the like. Also, the impression of the contents that the symbol image information symbolizes sometimes contains an impression representing a scene that is adequate to the place where the contents are played, or the like. For example, there are a music suitable to a fine day, a music that the user wishes to listen in springtime, a music suitable to a morning, and the like. In this case, the symbol image information is not limited to the information constituting the still picture, and the information constituting the moving picture may also be employed.

Also, plural pieces of symbol image information are the information constituting one symbol image that are chosen from a plurality of symbol images, which are classified into a plurality of categories to represent the impression of the contents, respectively. Concretely, there are a feeling category for indicating a human feeling generated based on the contents, a weather category for indicating a weather as a scene that is adequate to the place where the contents is played, or the like, a season category for indicating a season, a time category for indicating a time zone, and the like. In the foregoing example, the cheering music, and the like belong to the feeling category. The music suitable to a fine day belongs to the weather category. The music that the user wishes to listen in springtime belongs to the season category. The music suitable to a morning belongs to the time category.

Also, the case where the symbol image information associated with the contents identification information contained in the contents information is acquired automatically corresponds to the "acquisition of the symbol image information based on the contents information". At this time, the symbol image information being associated with the contents identification information are held in the storage such as HDD, or the like in the display device, the external server equipment, etc.

The "symbol image group output portion" (0303) outputs a group of symbol images such that these images can be displayed in slide show style. The "symbol image group" signifies a group of symbol images containing at least a plurality of symbol images that are constructed by plural pieces of acquired symbol image information. An example shown in FIG. 3, a group of images consisting of four sheets of symbol images representing healing, spring, cloudy, and night corresponds to the symbol image group. The "symbol image is displayed/output in slide show style" means an approach for displaying/outputting the symbol image group while switching the symbol image every predetermined time (e.g., 2 second, or the like) sequentially. In the above example, four sheets of symbol images representing healing, spring, cloudy, and night are displayed while being switched automatically. In this case, there is exceptionally the case where the predetermined time is not a constant time. For example, in the case where the display device is the car navigation system, in order to prevent such a situation that the driver becomes inattentive, the symbol image displayed when the vehicle starts to run may be displayed until the vehicle is stopped. In this case, the symbol image is switched as soon as the vehicle is stopped, and is displayed in slide show style.

Also, the "symbol image group output portion" (0303) may have a thumbnail outputting unit for displaying plural groups of symbol images associated with a plurality of contents respectively on one screen in thumbnail style contents by contents. The thumbnail style means a series of small images displayed as a list. Here, as shown in FIG.1, display of the contents and the symbol images associated with each other corresponds to the thumbnail style. Since the thumbnail style makes it possible for the user to compare a group of symbol images of a plurality of contents mutually on one screen, the user can choose easily the contents that fit in well with a user's present feeling.

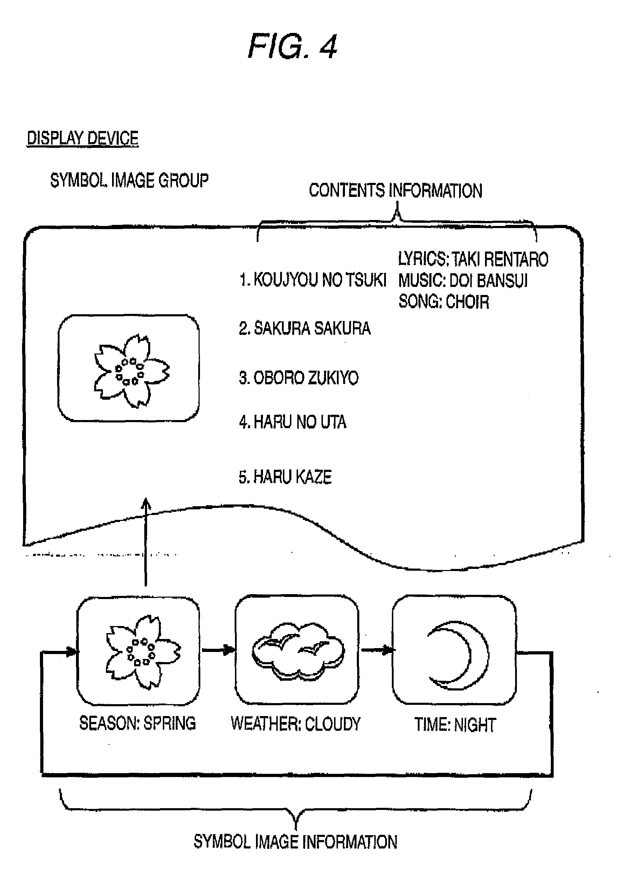

In addition, in some cases a plurality of contents are associated with a group of symbol images output in slide show style respectively. For example, in the case where contents information of five music pieces are associated with a group of symbol images constructed by three sheets of symbol images of spring, cloudy, and night when the user chooses the group of symbol images, a list of contents information (irrespective of full or a part) of five music pieces as shown in FIG.4 may be displayed. Also, the contents of five music pieces may be played sequentially. In this case, plural groups of symbol images with which a plurality of contents are correlated respectively may be displayed on one screen in thumbnail style.

Also, when the user choose the symbol image every category hierarchy, the display device may acquire all or a part of contents information that are associated with this symbol image, For example, when the user chooses the "cheering music" from the feeling category as an example on the assumption that the contents of ten thousand music pieces are registered, the target contents are narrowed down to two thousand music pieces, Then, the user chooses the "music that the user wishes to listen in a snow falling day" from the weather category, the target contents are narrowed down to five hundred music pieces. The user can get the music that fits in well with a user's feeling at that time while executing such operations and can listen such music. Otherwise, a group of symbol images can be used as a clue in searching a particular music. In this case, the symbol image is not always chosen to cover all hierarchies. At first the user chooses the contents from respective categories hierarchically, and then the user may choose the contents from the middle by viewing the slide show display. This approach is effective when the number of corresponding contents is reduced by the narrowing operation.

<First embodiment: Flow 1 of processes> FIG,5 shows an example of a flow of processes in reproducing the contents in the display device of the first embodiment, First, the display device acquires the contents information (contents information acquiring step S0501). The display device reads a play list such as a title of the contents, a name of artist, etc. contained in the contents information from the storage such as HDD, or the like or the external server equipment or the mobile medium. Then, the display device acquires plural pieces of symbol image information used to symbolize the impression of the contents based on the acquired contents information (symbol image information acquiring step S0502). This operation is executed by expanding the symbol images registered in the play list on a memory. Then, the display device displays/outputs the symbol image composed of the symbol image information (symbol image outputting step S0503). At this time, the display device may display/output all or a part of contents information. Also, the display device decides whether or not a predetermined time has elapsed, based on the event generated every elapse of a predetermined time in a timer (elapse-of-predetermined time deciding step S0504). If a predetermined time has elapsed, the display device switches the symbol image developed on the memory (symbol image switch step S0505). Then, the display device decides whether or not the output of a group of symbol images should be ended (end-of-output deciding step S0506). The display device repeats the elapse-of-predetermined time deciding step (S0504) and the symbol image switch step (S0505) until the decision result to the effect that the output of a group of symbol images should be ended is given. As a result, the display device can display a group of symbol images consisting of plural symbol images constructed by plural pieces of acquired symbol image information in slide show Style.

The above processes can be executed pursuant to the program that is executed by a computer, and also the program can be recorded on the computer-readable recording medium (This is true of the whole specification).

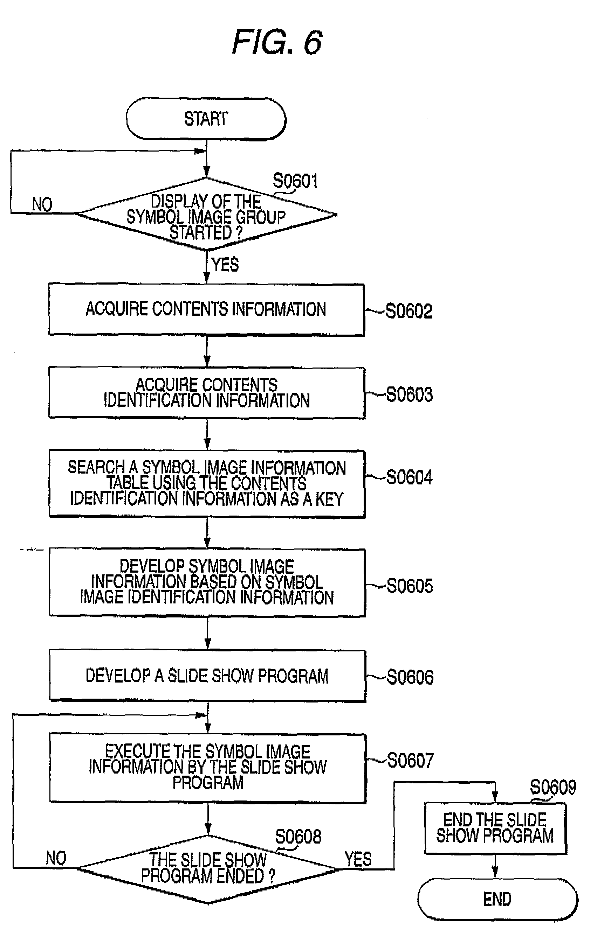

<Second embodiment: Flow 2 of processes> FIG.6 shows an example of a flow of hardware processes in reproducing the contents in the display device of the first embodiment. First, the display device decides whether or not a display start command indicating that the display of the symbol image group should be started is received (display start command decision step S0601). If it is decided that the display start command is not received, the display device repeats the display start command decision step (S0601), Then, the display device acquires contents information of the to-be-displayed contents from a contents information table in which the contents and attributes such as the identification information, and the like are held on the storage such as HDD, or the like as a table (contents information acquiring step S0602). Then, the display device acquires the contents identification information contained in the acquired contents information (contents identification information acquiring step S0603). Then, the display device searches a symbol image information table in which the symbol images and the identification information are held on the memory, or the like, by using the contents identification information as a key (symbol image information search step S0604). Then, the display device develops the symbol image information on a drawing memory, based on symbol image identification information searched and acquired in the symbol image information search step (S0604) (symbol image information developing step S0605).

Then, the display device develops a slide show program used to switch the symbol image on a main memory (slide show program developing step S0606). Then, the display device executes the symbol image information developed on the drawing memory pursuant to the slide show program (slide show program execution step S0607). Then, the display device decides whether or not the slide show program is ended (end-of-slide show program deciding step S0608). Unless the slide show program is ended, the display device repeats the slide show program execution step (S0607). In contrast, if it is decided that the slide show program was ended, the display device execute a process to end the slide show program (slide show program ending step S0609). The case where the screen is switched to another screen (e.g., a route guiding screen) or the case where it is decided that the vehicle equipped with the display device is traveling correspond to the slide show program ending condition. Because the slide show program is repeated in the display device, the symbol image can be switched on the display device to give a display behavior like a moving picture.

<First embodiment: Advantage> The present embodiment provides the display device characterized in that plural pieces of symbol image information for symbolizing the impression of the contents are acquired and then a group of symbol images consisting of a plurality of symbol images constructed by plural pieces of symbol image information are output in such a manner that the group can be displayed in- slide show style. Since a group of symbol images consisting of a plurality of symbol images constructed by plural pieces of symbol image information are displayed in slide show style, the user can recognize visually the image of contents even though such user has never viewed the contents being displayed. Also, the user can choose easily the contents that fit in well with a user's feeling on that day.

«Second embodiment»

<Second embodiment: Outline> A second embodiment will be explained hereunder. The present embodiment provides a display device characterized in that symbol image information are acquired based on the analyzed result of contents information and then a group of symbol images consisting of a plurality of symbol images constructed by the symbol image information are output in such a manner that the group can be displayed in slide show style.

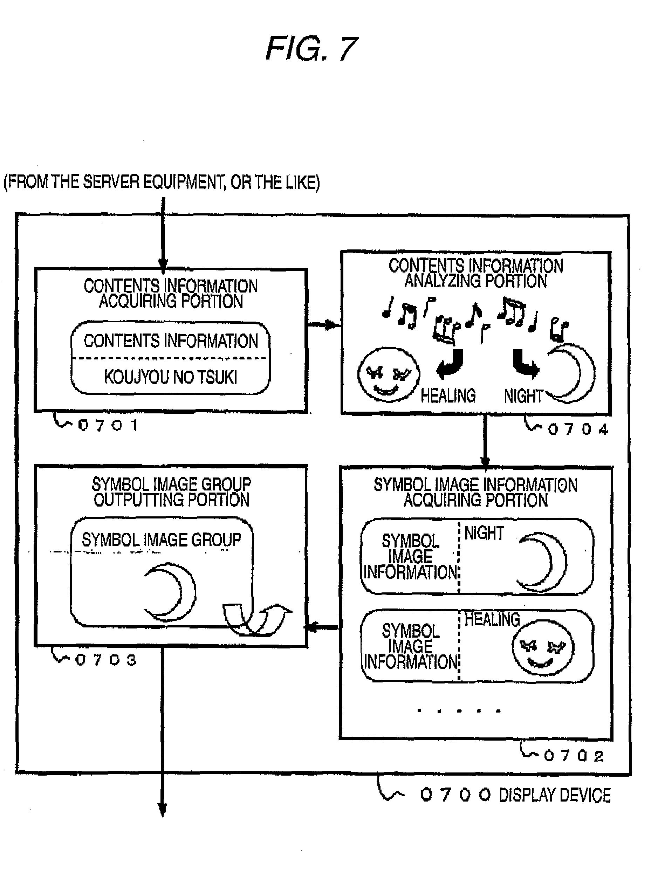

<Second embodiment: Configuration> An example of functional blocks of the present embodiment is shown in FIG.7. A "display device" (0700) of the present embodiment shown in FIG.7 includes a "contents information acquiring portion"(0701), a "symbol image information acquiring portion"(0702), a "symbol image group output portion"(0703), and a "contents information analysis portion" (0704).

The "contents information analysis portion" (0704) analyzes the contents information acquired by the contents information acquiring portion (0701), acquires the symbol image information based on the analyzed result, and outputs the acquired symbol image information to the symbol image information acquiring portion (0702). As disclosed in JP-A-2003-264795 and JP-A-2002-278547, the analysis of the contents information signifies that a tune or a content of the contents is made clear. When the analyzed result indicating the "lilting music" is obtained by the analysis of the contents information, the symbol image information corresponding to this result is obtained automatically from the memory, or the like.

Other processes in respective portions are similar to those in the first embodiment.

<Second embodiment; Flow of processes> A flow of processes in the present embodiment will be explained in the third embodiment, together with the searching process of a symbol image database described later.

<Second embodiment: Advantages> The present embodiment provides a display device characterized in that symbol image information are acquired based on the analyzed result of contents information and then a group of symbol images consisting of a plurality of symbol images constructed by the symbol image information are output in such a manner that the group can be displayed in slide show style. As a result, the symbol image can be displayed in response to the tune or the substance of the contents without user's particular operation, and therefore a user's convenience can be improved.

«Third embodiment»

<Third embodiment: Outline> A third embodiment will be explained hereunder. The present embodiment provides a display device characterized in that symbol image information associated with contents identification information are acquired based on the contents identification information contained in contents information and then a group of symbol images consisting of a plurality of symbol images constructed by the symbol image information are output in such a manner that the group can be displayed in slide show style.

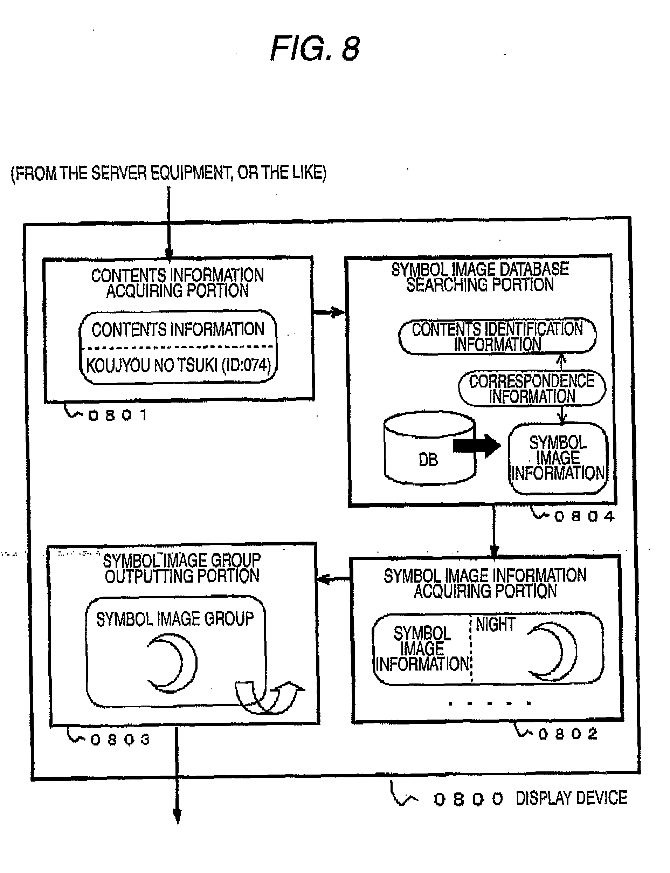

<Third embodiment: Configuration> An example of functional blocks of the present embodiment is shown in FIG.8. A "display device" (0800) of the present embodiment shown in FIG.8 includes a "contents information acquiring portion"(0801), a "symbol image information acquiring portion"(0802), a "symbol image group output portion"(0803), and a "symbol image database search portion"(0804). Here the functional block diagram based upon the first embodiment is illustrated, but sometimes another constituent element may be needed in addition to the above when the present embodiment is based upon other embodiment.

The "symbol image database search portion" (0804) acquires the symbol image information associated with the contents identification information, based on the contents identification information contained in the contents information acquired by the contents information acquiring portion (0801), and then outputs the acquired symbol image information to the symbol image information acquiring portion (0802). It is supposed that the contents identification information is contained in the contents information and the symbol image information associated with the contents identification information are prepared in advance. For example, there is the case where the symbol image information for representing an impression of a feeling showing a human's feeling generated based upon the contents or an impression of a scene that is suitable for the place where the contents are played, or the like are associated with respective contents, and stored as the database. At this time, the database is constructed sometimes not only by the common user but also by a particular learned person (e.g., DJ, a movie critic). The constructor of the database correlates the recommended image (e.g., the music that is suitable for listening in a rainy day, or the like) with the symbol image information in response to the contents.

In addition, in some cases the common user, or the like inputs the information contained in the contents information and attached to the contents (title name of the contents, name of the author, name of the player, and the like) to construct the database. The contents information acquisition portion can acquire the information contained in the contents information and attached to the contents from this database. When the common user constructs the database, the user may set up only a part of the database such that the database may be upgraded by a plurality of such users. These databases may be held in the memory, or the like in the display device. Normally these databases are held in the external server equipment, or the like, but the user may refer to these databases at need.

Also, the contents identification information and the symbol image information may be associated with each other and be held as correspondence information. The symbol image database search portion may acquire the symbol image information based on the correspondence information being held. The symbol image database search portion may hold plural pieces of correspondence information, and may choose the correspondence information utilized to get the symbol image information from plural pieces of held correspondence information. Even when plural pieces of symbol image information are present with respect to one content, it is expected that the user can execute smoothly the searching operation by choosing the adequate correspondence information from plural pieces of correspondence information.

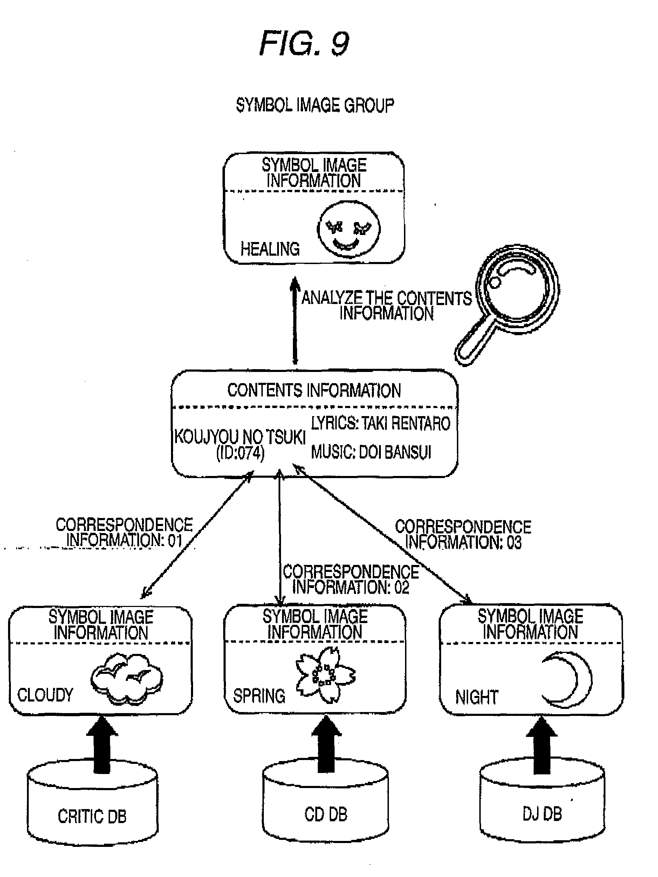

An example of correspondence information is shown in FIG.9. in the case where the contents is "Koujyou no tsuki", three pieces of symbol image information are associated with the contents identification information (ID:074) respectively. For convenience, assume that the correspondence information whose symbol image information is "cloudy" is "01", the correspondence information whose symbol image information is "spring" is "02", and the correspondence information whose symbol image information is "night" is "03". Because the correspondence information is held, these correspondences can be clarified and the symbol image information can be easily acquired. For example, the symbol image information constituting the symbol image whose display is not needed neither serves as the constituent image of the group of symbol images nor is displayed/output when the user does not choose the correspondence information.

Here, the searching process of the correspondence information "01" must be applied to acquire the symbol image information from the database constructed by the critics. Similarly, the searching process of the correspondence information "02" must be applied to acquire the symbol image information from the database (CDDB) constructed by the users, and the searching process of the correspondence information "03" must be applied to acquire the symbol image information from the database (DJDB) constructed by radio DJs. For example, in the case where the correspondence information contains only the correlation between the contents identification information and the symbol image information as the content and does not contain the symbol image itself, it is expected that, if the user can recognize whether or not the acquisition of the symbol image by searching any database is required based on the correspondence information, the searching operation of the symbol image from a plurality of databases are executed smoothly.

Other processes in respective portions are similar to those in the first and second embodiments.

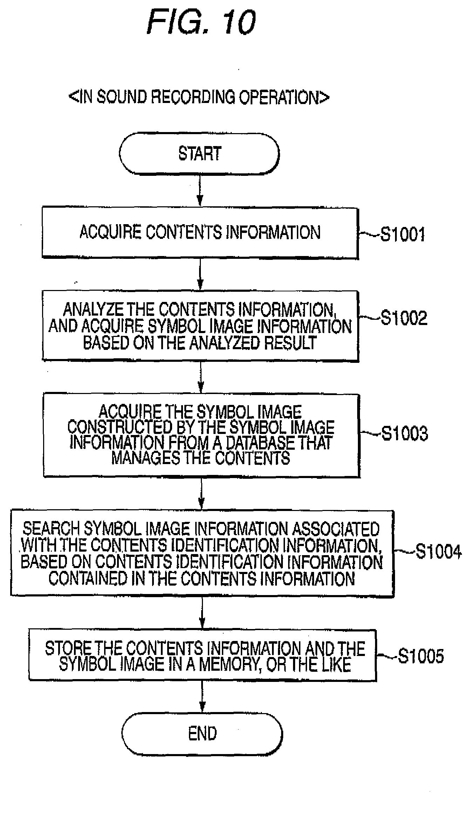

<Third embodiment: Flow of processes> FIG. 10 shows an example of a flow of processes in recording sounds of contents in the display device of the third embodiment. First, the display device acquires the contents information (contents information acquiring step S1001). The display device acquires the contents from the storage such as HDD, or the like, or the external server equipment, or the like. Then, the display device analyzes the acquired contents information, and then acquires the symbol image information based on the analyzed result (contents information analyzing step S1002). At this time, the display device may execute the analysis of the contents information and the compressing process of the contents information at the same time.

Then, the display device searches the symbol image information that is associated with the contents identification information, based on the contents identification information contained in the contents information (symbol image database searching step S1003). The symbol image information is acquired by searching the database in which the symbol image information associated with the contents identification information is registered previously. Then, the display device acquires the symbol image constructed by the symbol image information from a database that manages the contents (symbol image acquiring step S1004). Then, the display device stores the play list such as a title of the contents, a name of artist, and the like of the contents contained in the contents information and the symbol image acquired in the symbol image acquiring step (S1004)(play list storing step S1005). These may be stored in the storage such as HDD, or the like in the display device, or may be stored in the external server equipment, or the like.

<Third embodiment: Advantages> The present embodiment provides a display device characterized in that symbol image information associated with contents identification information are acquired based on the contents identification information contained in contents information and then a group of symbol images consisting of a plurality of symbol images constructed by the symbol image information are output in such a manner that the group can be displayed in slide show style. As a result, even though a plurality of databases are provided, it can be expected that the searching operation of the symbol image is executed smoothly.

<<Fourth embodiment>>

<Fourth embodiment: Outline> The fourth embodiment will be explained hereunder. The present embodiment provides a display device characterized in that correspondence information used to correlate the contents identification information with the symbol image information can be managed.

<Fourth embodiment: Configuration> An example of functional blocks of the present embodiment is similar to that has already been shown in FIG.8. The "display device" (0800) of the present embodiment shown in FIG.8 includes the "contents information acquiring portion"(0801), the "symbol image information acquiring portion"(0802), the "symbol image group output portion"(0803), and the "symbol image database search portion"(0804). Also, the "symbol image database search portion"(0804) may have a "managing unit".

The "managing unit" executes a process to manage the correspondence information held in the display device. Here, addition, deletion, modification, etc. of the correspondence information correspond to the management. The addition or deletion may be executed in the database following upon the addition or deletion of the correspondence information. Even though plural databases are provided, the database to be searched can be designated freely by managing the correspondence information, As a result, it can be expected that the searching operation of the symbol image is executed smoothly.

Other processes in respective portions are similar to those in the third embodiment.

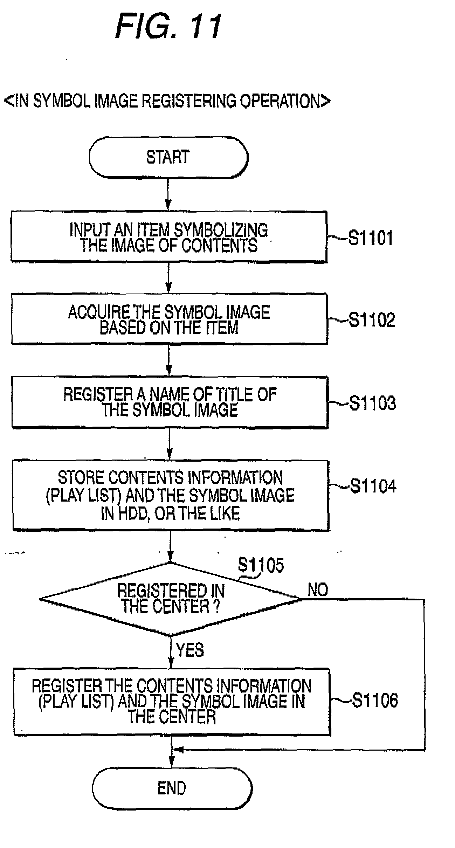

<Fourth embodiment: Flow of processes> FIG. 11 shows an example of a flow of processes (of constructing a database by the user) in registering the symbol image in the display device of the fourth embodiment. First, the user inputs an item that symbolizes the impression of the contents (item inputting step S1101). For example, the user inputs the item representing a season, a time, a tune, or the like. Then, the display device acquires the symbol image based on the item that symbolizes the input impression (symbol image acquiring step S1102). Here, an approach for acquiring the symbol image from the server equipment of the center, or the like by using a communicating unit or an approach for acquiring the symbol image from the data storage medium such as a PC card, or the like may be supposed. Then, the display device registers a name of title of the symbol image acquired in this manner (symbol image name registering step S1103). The symbol image is registered in the play list together with a title of the contents, a name of the artist, etc. contained in the contents information. Then, the display device stores the symbol image and the data in the play list in the hard disk, or the like (storing step S1104). Then, the display device decides whether or not the data should be registered in the server equipment in the center (deciding step S1105). Concretely, if the data are not registered yet, the display device decides that the contents information (play list) and the symbol image are registered in the center (S1106). In contrast, if the data have already been registered, the display device decides that these data are not registered in the center.

<Fourth embodiment: Advantages> The present embodiment provides the display device characterized in that the held correspondence information can be managed. Since the correspondence information can be managed, the user can designate freely the database to be searched. As a result, it can be expected that the searching operation of the symbol image is executed smoothly.

## Claims

1. A display device, comprising:
a contents information acquiring portion which acquires contents information;
a symbol image information acquiring portion which acquires plural pieces of symbol image information used for symbolizing an image of a contents based on the acquired contents information; and
a symbol image group output portion which outputs a group of symbol images assembled by a plurality of the symbol images constructed by the plural pieces of symbol image information such that the group of the symbol images is displayed in slide show style.

2. The display device according to claim 1, wherein the symbol image group output portion has a thumbnail outputting unit which displays plural groups of symbol images associated with a plurality of contents respectively on one screen in thumbnail style contents by contents.

3. The display device according to claim 1 or 2, further comprising:
a contents information analysis portion which analyzes the contents information acquired by the contents information acquiring portion, acquires the symbol image information based on an analyzed result, and outputs the acquired symbol image information to the symbol image information acquiring portion.

4. The display device according to any one of claims 1 to 3, wherein contents identification information is contained in the contents information,
the display device further comprising:
a symbol image database search portion which acquires the symbol image information associated with the contents identification information based on the contents identification information contained in the contents information acquired by the contents information acquiring portion, and outputs the acquired symbol image information to the symbol image information acquiring portion.

5. The display device according to claim 4, wherein the symbol image database search portion holds correspondence information as information that correlates the contents identification information with the symbol image information; and
wherein an acquisition of the symbol image information is conducted based upon the held correspondence information.

6. The display device according to claim 5, wherein the symbol image database search portion is able to hold plural pieces of correspondence information, and selects the correspondence information utilized to acquire the symbol image information from plural pieces of held correspondence information.

7. The display device according to claim 6, wherein the symbol image database search portion has a managing unit which manages the held correspondence information.
